Europäisches Patentamt

European Patent Office

Office européen des brevets

(19)

(11) **EP 0 778 701 B1**

(12) **EUROPEAN PATENT SPECIFICATION**

(45) Date of publication and mention
of the grant of the patent:
**17.05.2000 Bulletin 2000/20**

(51) Int Cl.⁷: **H04N 5/783**, H04N 11/00

(21) Application number: **96308487.6**

(22) Date of filing: **25.11.1996**

(54) **Vertical extension processing apparatus of a video screen and method, in video cassette recorders of PAL plus system**

Schaltung und Verfahren zur Erhöhung der Vertikalausdehnung eines Bildes bei Wiedergabe eines PAL-Plus Signales durch einen VCR

Circuit et procédé pour augmenter l'extension verticale d'une image pendant la reproduction d'un signal PAL-plus par un VCR

| | |
|---|---|
| (84) Designated Contracting States:<br>**DE FR GB NL** | (74) Representative: **Chugg, David John et al**<br>**Appleyard Lees,**<br>**15 Clare Road**<br>**Halifax, West Yorkshire HX1 2HY (GB)** |
| (30) Priority: **06.12.1995 KR 9547106** | |
| (43) Date of publication of application:<br>**11.06.1997 Bulletin 1997/24** | (56) References cited:<br>**EP-A- 0 539 033**   **EP-A- 0 600 376** |
| (73) Proprietor: **SAMSUNG ELECTRONICS CO., LTD.**<br>**Suwon-City, Kyungki-do (KR)** | • **PATENT ABSTRACTS OF JAPAN vol. 013, no. 539 (E-853), 30 November 1989 (1989-11-30) & JP 01 221075 A (SONY CORP), 4 September 1989 (1989-09-04)** |
| (72) Inventor: **Bae, Kwang-Seog**<br>**Suwon-city, Kyungki-do (KR)** | |

**Description**

The present invention relates to a video cassette recorder (VCR) of a PAL plus system and, more particularly, to an apparatus for eliminating a dark bar generated during a fast forward operation in a VCR of a PAL plus system.

A display format of most television apparatuses used up to now has a screen ratio of 4:3 in display means achieved by an image display region of a typical cathode ray tube as well as in a screen for a projection television apparatus. Similarly, the screen ratio of most video sources is also 4:3.

However, not all video sources have a screen ratio of 4:3. A PAL plus system is a television broadcasting system having the screen ratio of 16:9. The PAL plus system is compatible with the television having the screen ratio of 4:3. In a film for example, a film format is converted to a video tape format in order to be reproduced or transmitted to a television signal. When converting film sources to the video format, the screen ratio has been changed to 4:3 which is suitable for most television apparatuses. As one example of the film source, there is a wide screen source having the display format of the screen ratio of 16:9. When the film source is converted to the video format, an apparatus such as a flying spot telecine is used. The flying spot telecine has a window or a frame with a screen ratio of 4:3. Typically, the operator traces the center of an action in the film and simultaneously cuts the right and left portions of an image to move the window to the right and left. This is because the horizontal width of the image of the film becomes wider than that of the screen having the screen ratio of 4:3 when the vertical height of the image of the film is adjusted to the screen having the screen ratio of 4:3. Hence, a video signal converted to the screen ratio of 4:3 from the film source of the screen ratio of 16:9 loses its right and left portions corresponding to the cut portions from the image of the film.

If the image of the wide screen is reduced until the horizontal width of the wide screen is equal to the right and left boundary lines of the screen having the screen ratio of 4:3, the vertical height of the image becomes smaller. Consequently, the image of the film source completely appears on the screen having the screen ratio of 4:3. In such a case, at the top and bottom of the screen having the screen ratio of 4:3, there is a portion in which the image is not filled. In order to escape a spurious signal which may be generated at such an image-free portion, a dark bar is transmitted to the top and bottom of the image converted to the screen ratio of 4:3. Such a display format is generally called a letter box format.

If the video signal of the letter box format is displayed on a television of screen ratio 16:9 without processing the received signal, dissimilation that the image of the video source spreads to the right and left or a dark bar occurs. In the PAL plus system, the received video signal of the letter box format is processed to provide the video screen eliminating the dissimilation or the dark bar.

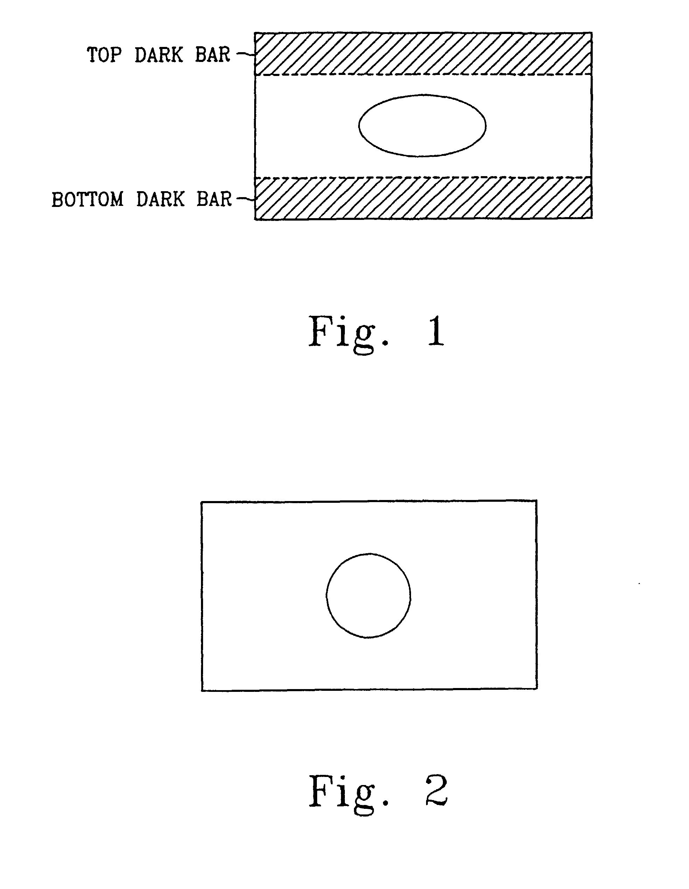

However, in a VCR of the PAL plus system, the dissimilation that the image of the video source spreads to the right and left, and the top and bottom dark bars are generated during a fast forward operation, as shown in Figure 1. This is because the video signal is generated without signal processing during the fast forward operation. That is, since an image of one frame is constructed by being read from various frames, mutual dependence between fields within the frame is lost. Therefore, a basic precondition for converting the letter box format to the video signal of the screen ratio of 16:9 is lost, and the screen of the signal processing of the PAL plus system is very distorted. To prevent this, a wide screen signalling is corrected in the VCR of the PAL plus system so that the video signal should be processed by a PAL plus television during the fast forward operation in the PAL plus television. Then the PAL plus television has the top and bottom dark bars and generates the dissimilation.

In eliminating the dissimilation and the dark bars during the fast forward operation in the PAL plus system, the video signal is extended to the vertical direction lest the image of the video source should spread to the right and left in the television screen having the screen ratio of 16:9 and simultaneously the top and bottom dark bars should appear.

Patent abstract of Japan, volume 13, No. 539, November 30 1989, page 128, E853, JP-A-01221075 (Sony) discloses a processor for video signals. This document discloses an arrangement which aims to provide an excellent image quality even when the number of lines of reproduced video signals in one field varies. The abstract discloses reading date from a memory so that lines of reproduced video signals written in the memory or thinned or interpolated at a period corresponding to the speed of reproduction. The document discloses a decision circuit which controls a pair of controllers. When a high speed variable - speed reproduction mode is decided on, a write line address and read line address in the memory or controlled. By performing this control, for instance when reviewing, the number of lines of reproduced video signals in a field increases.

It is an aim of embodiments of the present invention to provide a vertical extension processing apparatus of a video screen which eliminates top and bottom dark bars generated by vertically extending a video signal during a fast forward operation in a VCR of a PAL plus system.

It is another aim to provide a vertical extension processing apparatus of a video screen which eliminates dissimilation generated by vertically extending a video signal during a fast forward operation in a VCR of a PAL plus system.

According to an aspect of the invention, there is provided a vertical extension processing apparatus for supplying a video signal of video signal reproducing means to video signal processing means and prevent top and bottom dark bars being generated and output to a screen having a screen ratio of 4:3 during a fast forward operation in a video cassette recorder of a PAL plus system, said apparatus comprising: vertical extension operation means connected to said video signal reproducing means, for generating a vertical extension operation signal by vertically extending horizontal scanning lines of said video signal by a sampling clock signal to change the screen ratio by a factor 3:4 so as to change a PAL Plus signal having a screen ratio of 16:9 into a signal with a screen ratio of 4:3; and switching means connected to said video signal reproducing means and to said vertical extension operation means, the switching means having first and second switch states corresponding to a normal operation and a fast forward operation respectively, according to the condition of a control system, the switching means being arranged during a normal operation in which the control signal is in a first condition to form a path between said video signal processing means and said video signal reproducing means by a control signal to generate said video signal, and, during said fast forward operation, to form a path between said video signal processing means and said vertical extension operation means by said control signal to generate said vertical extension operation signal.

Preferably, said vertical extension operation means comprises: first line memory means connected to said video signal reproducing means, for storing said horizontal scanning line by said sampling clock signal; second line memory means for storing said horizontal scanning line generated from said first line memory means by said sampling clock signal; and operation means consisting of coefficient multipliers and an adder, for vertically extending output data of said video signal reproducing means and said first and second line memory means to 3:4 by using the following operation equations;

$$Lo1 = C0 \cdot Lin1 + C1 \cdot Lin2 + C2 \cdot Lin3$$

$$Lo2 = C3 \cdot Lin1 + C4 \cdot Lin2 + C5 \cdot Lin3$$

$$Lo3 = C6 \cdot Lin1 + C7 \cdot Lin2 + C8 \cdot Lin3$$

$$Lo4 = C9 \cdot Lin1 + C10 \cdot Lin2 + C11 \cdot Lin3$$

where Lo1, Lo2, Lo3 and Lo4 are data corresponding to said vertical extension operation signal, Lin1 is data corresponding to said horizontal scanning line generated from said video signal reproducing means, Lin2 is data corresponding to said horizontal scanning line generated from said first line memory means, Lin3 is data corresponding to said horizontal scanning line generated from the second line memory means, and C0, C1, C2, C3, C4, C5, C6, C7, C8, C9, C10 and C11 are vertical extension coefficients.

The invention extends to a video recorder including the vertical extension processing apparatus according to the above aspect.

According to a second aspect of the invention, there is provided method of eliminating top and bottom dark bars generated during a fast forward operation in a video cassette recorder of a PAL plus system, the method comprising: during playback connecting an output video signal of a video signal reproducing circuit of the video cassette recorder directly to a video signal processor; and during a fast forward operation connecting the output video signal of the reproducing circuit to the video signal processor via a vertical extension operation means, whereby said vertical extension operation means performs an extension operation by vertically extending horizontal scanning lines of said video signal by a sampling clock signal to change the screen ratio by a factor of 3:4 so as to change a PAL Plus signal having a screen ratio of 16:9 into a signal with a screen ratio of 4:3.

Preferably, said method comprises, during a fast forward operation, the steps of: applying the video signal to an input terminal of a first line memory means and to a first input terminal of a first coefficient multiplier; applying an output signal of the first line memory means to an input of a second line memory means and to a first input terminal of a second coefficient multiplier; applying an output signal of the second line memory means to a first input terminal of a third coefficient multiplier; applying vertical extension coefficients to second input terminals of said first, second and third coefficient multipliers; and summing output signals from said coefficient multipliers and applying the resulting summed signal to said video signal processor.

For a better understanding of the invention, and to show how embodiments of the same may be carried into effect, reference will now be made, by way of example, to the accompanying diagrammatic drawings, in which:

Figure 1 is a view illustrating an image displayed on a screen having a screen ratio of 16:9 during a fast forward operation in a VCR of a PAL plus system according to the prior art;

Figure 2 is a view illustrating an image displayed on a screen having a screen ratio of 16:9 during a fast forward operation in a VCR of a PAL plus system according to the present invention; and

Figure 3 is a block diagram illustrating a vertical extension processing apparatus of a video screen in a VCR of a PAL plus system according to the present invention.

In the following description, numerous specific details are set forth to provide a more thorough understanding of the present invention. It will be apparent, however, to one skilled in the art, that the present invention may be practised without these specific details. In other instances, well known functions and constructions have not been described so as not to obscure the present invention.

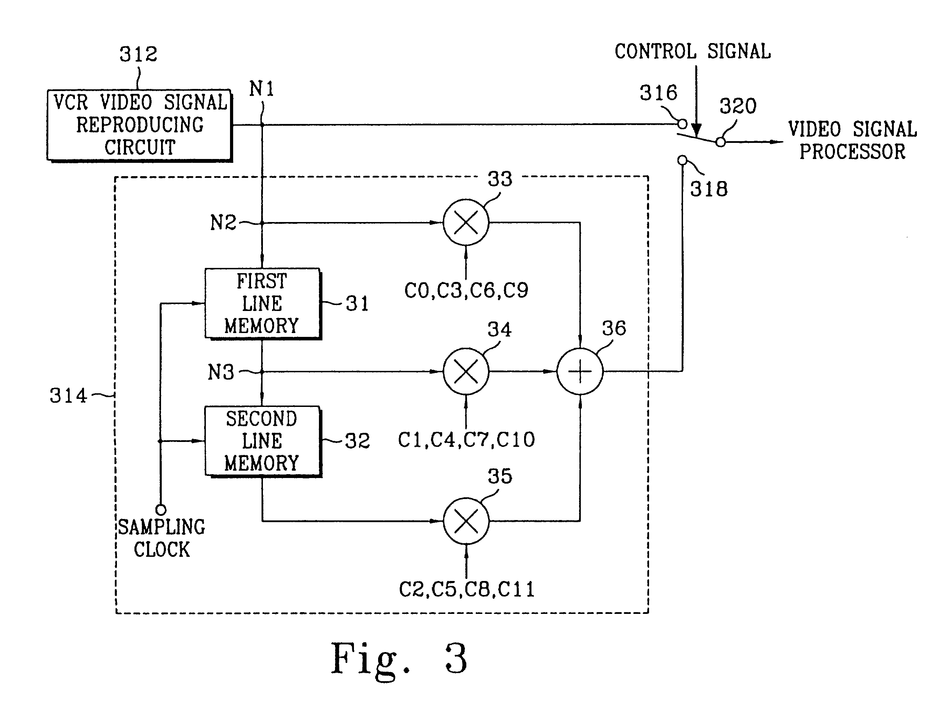

A vertical extension processing apparatus of a video screen in a VCR of a PAL plus system is shown in Figure 3. A VCR video signal reproducing circuit 312 reproduces a video signal in the VCR and generates horizontal scanning lines. A switching circuit consisting of a first node N1 connected to the VCR video signal reproducing circuit 312, a first terminal 316, a second terminal 318, and a switching terminal 320 connected to a video signal processor is switched by a control signal generated from a controller (not shown). A ratio of dark bars to the entire screen of the total number of vertical lines is about 1/4. In order to eliminate the dark bars, the vertical lines of 4/4 should be restored from the vertical lines of 3/4. A vertical extension operation circuit 314 for vertical extension of 3:4 is connected between the first node N1 and the second terminal 318.

A first line memory 31 connected to a second node N2 which is coupled to the first node N1 can store one line among the horizontal scanning lines. A second line memory 32 connected to the first line memory 31 has the same characteristic as the first line memory 31. A first coefficient multiplier 33 connected to the second node N2 sequentially multiplies input data by 4 vertical extension coefficients C0, C3, C6 and C9. A second coefficient multiplier 34 connected to a third node N3 sequentially multiplies input data by 4 vertical extension coefficients C1, C4, C7 and C10. A third coefficient multiplier 35 connected to the second line memory 32 sequentially multiplies input data by 4 vertical extension coefficients C2, C5, C8 and C11. An adder 36 connected to the first, second and third coefficient multipliers 33, 34 and 35 adds input data to one another and supplies a vertical operation signal to the second terminal 318. The first and second line memories 31 and 32 are constructed with first-in first-out (FIFO) memories.

In operation, when a fast forward operation is not performed, the switching terminal 320 is switched to the first terminal 316 by the control signal. Then the video signal generated from the VCR video signal reproducing circuit 312 is supplied to the video signal processor through the switching circuit.

When the fast forward operation is performed, the switching terminal 320 is switched to the second terminal 318. Then horizontal scanning line data of the video signal of the VCR video signal reproducing circuit 312 is applied to the first node N1 and to the second node N2. The first line memory 31 receiving the data of the second node N2 by a sampling clock signal supplies the horizontal scanning line data to the third node N3. The second line memory 32 receives the data of the third node N3 by the sampling clock signal. Thus, the horizontal scanning lines are sequentially applied to the first and second line memories 31 and 32.

At the same time, the first coefficient multiplier 33 receives the data of the second node N2, and the second coefficient multiplier 34 receives the data of the third node N3. The third coefficient multiplier 35 receives the data of the second line memory 32. The coefficient multipliers 33, 34 and 35 respectively multiply the input data by respective vertical extension coefficients and supply respective results to the adder 36. The adder 36 adds data generated from the coefficient multipliers 33, 34 and 35 to one another and supplies the added result to the video signal processor through the switching circuit switched to the second terminal 318.

Thus, vertically extended operation data is generated from the vertical extension operation circuit 314 by the following equations:

$$Lo1 = C0 \cdot Lin1 + C1 \cdot Lin2 + C2 \cdot Lin3 \qquad (1)$$

$$Lo2 = C3 \cdot Lin1 + C4 \cdot Lin2 + C5 \cdot Lin3 \qquad (2)$$

$$Lo3 = C6 \cdot Lin1 + C7 \cdot Lin2 + C8 \cdot Lin3 \qquad (3)$$

$$Lo4 = C9 \cdot Lin1 + C10 \cdot Lin2 + C11 \cdot Lin3 \tag{4}$$

where Lo1, Lo2, Lo3 and Lo4 are data corresponding to the vertical operation signal. Lin1 is data corresponding to the horizontal scanning line generated from the video signal reproducing circuit 312, Lin2 is data corresponding to the horizontal scanning line generated from the first line memory 31, and Lin3 is data corresponding to the horizontal scanning line generated from the second line memory 32. C0, C1, C2, C3, C4, C5, C6, C7, C8, C9, C10 and C11 are the vertical extension coefficients.

As described above, during a normal operation, the video signal is generated through a conventional path, and during the fast forward operation, the video signal is generated through the vertical extension operation circuit 314. Thus, the video signal is vertically extended to eliminate the dark bars. Since the dark bars and dissimilation are eliminated during the fast forward operation, the better screen is achieved.

It should be understood that the present invention is not limited to the particular embodiment disclosed herein as the best mode contemplated for carrying out the present invention, but rather that the present invention is not limited to the specific embodiments described in this specification except as defined in the appended claims.

## Claims

1. A vertical extension processing apparatus for supplying a video signal of video signal reproducing means (312) to video signal processing means and prevent top and bottom dark bars being generated and output to a screen having a screen ratio of 4:3 during a fast forward operation in a video cassette recorder of a PAL plus system, said apparatus comprising:

    vertical extension operation means (314) connected to said video signal reproducing means (312), for generating a vertical extension operation signal by vertically extending horizontal scanning lines of said video signal by a sampling clock signal to change the screen ratio by a factor 3:4 so as to change a PAL Plus signal having a screen ratio of 16:9 into a signal with a screen ratio of 4:3; and

    switching means (316 - 320) connected to said video signal reproducing means (312) and to said vertical extension operation means (314), the switching means having first and second switch states corresponding to a normal operation and a fast forward operation respectively, according to the condition of a control system, the switching means being arranged during a normal operation in which the control signal is in a first condition to form a path between said video signal processing means and said video signal reproducing means (312) by a control signal to generate said video signal, and, during said fast forward operation, to form a path between said video signal processing means and said vertical extension operation means (314) by said control signal to generate said vertical extension operation signal.

2. A vertical extension processing apparatus of a video screen as claimed in claim 1, wherein said vertical extension operation means (314) comprises:

    first line memory means (31) connected to said video signal reproducing means (312), for storing said horizontal scanning line by said sampling clock signal;

    second line memory means (32) for storing said horizontal scanning line generated from said first line memory means (31) by said sampling clock signal; and

    operation means consisting of coefficient multipliers (33-35) and an adder (36), for vertically extending output data of said video signal reproducing means and said first and second line memory means to 3:4 by using the following operation equations;

$$Lo1 = C0 \cdot Lin1 + C1 \cdot Lin2 + C2 \cdot Lin3$$

$$Lo2 = C3 \cdot Lin1 + C4 \cdot Lin2 + C5 \cdot Lin3$$

$$Lo3 = C6 \cdot Lin1 + C7 \cdot Lin2 + C8 \cdot Lin3$$

$$Lo4 = C9 \cdot Lin1 + C10 \cdot Lin2 + C11 \cdot Lin3$$

where Lo1, Lo2, Lo3 and Lo4 are data corresponding to said vertical extension operation signal, Linl is data corresponding to said horizontal scanning line generated from said video signal reproducing means (312), Lin2 is data corresponding to said horizontal scanning line generated from said first line memory means (31), Lin3 is data corresponding to said horizontal scanning line generated from the second line memory means (32), and C0, C1, C2, C3, C4, C5, C6, C7, C8, C9, C10 and C11 are vertical extension coefficients.

3. A video recorder including the vertical extension processing apparatus according to claim 1 or 2.

4. A method of eliminating top and bottom dark bars generated during a fast forward operation in a video cassette recorder of a PAL plus system, the method comprising:

during playback connecting an output video signal of a video signal reproducing circuit (312) of the video cassette recorder directly to a video signal processor; and

during a fast forward operation connecting the output video signal of the reproducing circuit (312) to the video signal processor via a vertical extension operation means (314), whereby said vertical extension operation means (314) performs an extension operation by vertically extending horizontal scanning lines of said video signal by a sampling clock signal to change the screen ratio by a factor of 3:4 so as to change a PAL Plus signal having a screen ratio of 16:9 into a signal with a screen ratio of 4:3.

5. A method according to claim 4, wherein said method comprises, during a fast forward operation, the steps of:

applying the video signal to an input terminal of a first line memory means (31) and to a first input terminal of a first coefficient multiplier (33);

applying an output signal of the first line memory means (31) to an input of a second line memory means (32) and to a first input terminal of a second coefficient multiplier;

applying an output signal of the second line memory means (32) to a first input terminal of a third coefficient multiplier (35);

applying vertical extension coefficients to second input terminals of said first, second and third coefficient multipliers (33-35); and

summing output signals from said coefficient multipliers (33-35) and applying the resulting summed signal to said video signal processor.

**Patentansprüche**

1. Verarbeitungseinrichtung für die Vertikalausdehnung zur Zuführung eines Videosignals einer Videosignalwiedergabeeinrichtung (312) zu einer Videosignalverarbeitungseinrichtung und zur Verhinderung der Erzeugung und Ausgabe eines oberen und unteren, dunklen Streifens und an einen Bildschirm, der ein Seitenverhältnis von 4:3 aufweist, während eines schnellen Vorwärtsbetriebs in einem Videokassettengerät eines PAL-PLUS Systems, wobei die Vorrichtung umfaßt:

eine Vertikalausdehnungs-Operationseinrichtung (314), die mit der Videosignalwiedergabeeinrichtung (312) verbunden ist, um eine Vertikalausdehnungsbetriebssignal zu erzeugen, indem horizontale Abtastzeilen des Videosignals durch ein Abtasttaktsignal vertikal ausgedehnt werden, um das Seitenverhältnis um einen Faktor 3:4 zu ändern, so daß ein PAL-PLUS Signal mit einem Seitenverhältnis von 16:9 zu einem Signal mit einem Seitenverhältnis von 4:3 geändert wird; und

eine Schaltereinrichtung (316-320), die mit der Videosignalwiedergabeeinrichtung (312) und der Vertikalausdehnungs-Operationseinrichtung (314) verbunden ist, wobei die Schaltereinrichtung einen ersten und einen zweiten Schalterzustand aufweist, der einem normalen Betrieb bzw. einem schnellen Vorwärtsbetrieb entsprechend dem Zustand eines Steuersystems entspricht, wobei die Schaltereinrichtung während eines normalen Betriebs, in dem das Steuersignal in einem ersten Zustand ist, ausgebildet ist, einen Weg zwischen der Videosignalverarbeitungseinrichtung und der Videosignalwiedergabeeinrichtung (312) durch ein Steuersignal zu bilden, um das Videosignal zu erzeugen, und während des schnellen Vorwärtsbetriebs einen Weg zwischen der Videosignalverarbeitungseinrichtung und der Vertikalausdehnungs-Operationseinrichtung (314) durch das Steuersignal zu bilden, um das Vertikalausdehnungs-Operationssignal zu erzeugen.

2. Vertikalausdehnungs-Verarbeitungseinrichtung für einen Videobildschirm, wie in Anspruch 1 beansprucht, wobei die Vertikalausdehnungs-Operationseinrichtung (314) umfaßt:

eine erste Zeilenspeichereinrichtung (31), die mit der Videosignalwiedergabeeinrichung (312) verbunden ist, um die horizontale Abtastzeile durch das Abtasttaktsignal zu speichern;

eine zweite Zeilenspeichereinrichtung (32), um die horizontale Abtastzeile, die von der ersten Zeilenspeichereinrichtung (31) erzeugt wird, durch das Abtasttaktsignal zu speichern; und

eine Operationseinrichtung, die aus Koeffizientenmultiplikationseinrichtungen (33-35) und einem Addierer (36) zur vertikalen Ausdehnung von Ausgangsdaten der Videosignalwiedergabeeinrichtung und der ersten und zweiten Zeilenspeichereinrichtung auf 3:4 besteht, indem die folgenden Operationsgleichungen verwendet werden:

$$Lo1 = C0{\cdot}Lin1 + C1{\cdot}Lin2 + C2{\cdot}Lin3$$

$$Lo2 = C3{\cdot}Lin1 + C4{\cdot}Lin2 + C5{\cdot}Lin3$$

$$Lo3 = C6{\cdot}Lin1 + C7{\cdot}Lin2 + C8{\cdot}Lin3$$

$$Lo4 = C9{\cdot}Lin1 + C10{\cdot}Lin2 + C11{\cdot}Lin3$$

worin Lo1, Lo2, Lo3 und Lo4 Daten sind, die dem vertikalen Operationssignal zur Vertikalausdehnung entsprechen, Lin1 Daten sind, die der horizontalen Abtastzeile entsprechen, die von der Videosignalwiedergabeschaltung (312) erzeugt worden sind, Lin2 Daten sind, die der horizontalen Abtastzeile entsprechen, die von dem ersten Zeilenspeicher (31) erzeugt wird, und Lin3 Daten sind, die der horizontalen Abtastzeile entsprechen, die von dem zweiten Zeilenspeicher (32) erzeugt sind. C0, C1, C2, C3, C4, C5, C6, C7, C8, C9, C10 und C11 die vertikalen Ausdehnungskoeffizienten sind.

3. Videobandgerät, das die Vertikalausdehnungs-Verarbeitungseinrichtung gemäß Anspruch 1 oder 2 umfaßt.

4. Verfahren zum Entfernen des oberen und unteren, dunklen Streifens, der während einer schnellen Vorwärtsoperation in einem Videokassettengerät eines PAL-PLUS Systems erzeugt wird, wobei das Verfahren umfaßt:

während der Wiedergabe ein Ausgangsvideosignal einer Videosignalwiedergabeschaltung (312) des Videokassettengeräts unmittelbar mit einem Videosignalprozessor zu verbinden;

während eines schnellen Vorwärtsbetriebs das Ausgangsvideosignal der Wiedergabeschaltung (312) mit dem Videosignalprozessor über eine Vertikalausdehnungs-Operationseinrichtung (314) zu verbinden, wodurch die Vertikalausdehnungs-Operaionseinrichtung (314) eine Ausdehnungsoperation durchführt, indem horizontale Abtastzeilen des Videosignals durch ein Abtasttaktsignal vertikal ausgedehnt werden, damit das Seitenverhältnis um einen Faktor von 3:4 geändert wird, damit ein PAL-PLUS Signal mit einem Seitenverhältnis von 16:9 in ein Signal mit einem Seitenverhältnis von 4:3 umgewandelt wird.

**5.** Verfahren gemäß Anspruch 4, wobei das Verfahren während eines schnellen Vorwärtsbetriebs die Schritte umfaßt:

Anlegen des Videosignals an eine Eingangsklemme einer ersten Zeilenspeichereinrichtung (31) und um eine erste Eingangsklemme einer ersten Koeffizientenmultiplikationseinrichtung (33);

Anlegen eines Ausgangssignals der ersten Zeilenspeichereinrichtung (31) an einen Eingang einer zweiten Zeilenspeichereinrichtung (32) und an eine erste Eingangsklemme einer zweiten Koeffizientenmultiplikationseinrichtung;

Anlegen eines Ausgangssignals der zweiten Zeilenspeichereinrichtung (32) an eine erste Eingangsklemme einer dritten Koeffizientenmultiplikationseinrichtung (35);

Anlegen von Vertikalausdehnungskoeffizienten an eine zweite Eingangsklemme der ersten, zweiten und dritten Koeffizientenmultiplikationseinrichtung (33-35); und

Aufsummieren der Ausgangssignale von den Koeffizientenmultiplikationseinrichtungen (33-35) und Anlegen des sich ergebenden, aufsummierten Signals an den Videosignalprozessor.

## Revendications

**1.** Dispositif de traitement d'extension verticale destiné à fournir un signal vidéo, provenant d'un moyen de reproduction de signaux vidéo (312), à un moyen de traitement de signaux vidéo, et à empêcher la formation de barres foncées supérieure et inférieure et leur apparition sur un écran ayant un rapport de l'image de 4/3 pendant une opération d'avance rapide dans un magnétoscope à cassettes d'un système PAL Plus, ledit dispositif comprenant :

un moyen d'obtention d'extension verticale (314), relié audit moyen de reproduction de signaux vidéo (312), afin de produire un signal d'exécution d'extension verticale, en procédant à une extension verticale des lignes de balayage horizontal dudit signal vidéo, grâce à un signal d'horloge d'échantillonnage, afin de modifier le rapport de l'image d'un facteur de 3/4 de manière à transformer un signal PAL Plus ayant un rapport de l'image de 16/9 en un signal ayant un rapport de l'image de 4/3 ; et
des moyens de commutation (316 à 320), reliés audit moyen de reproduction de signaux vidéo (312) et audit moyen d'obtention d'extension verticale (314), les moyens de commutation présentant un premier et un second état de commutation, correspondant respectivement à un fonctionnement normal et à un fonctionnement d'avance rapide, en fonction des conditions d'un système de commande, les moyens de commutation étant prévus, pendant un fonctionnement normal dans lequel le signal de commande est dans une première forme, en vue de constituer un chemin entre ledit moyen de traitement de signaux vidéo et ledit moyen de reproduction de signaux vidéo (312), grâce à un signal de commande afin de produire ledit signal vidéo et, pendant ledit fonctionnement d'avance rapide, en vue de constituer un chemin entre ledit moyen de traitement de signaux vidéo et ledit moyen d'obtention d'extension verticale (314), grâce audit signal de commande afin de produire ledit signal d'exécution d'extension verticale.

**2.** Dispositif de traitement d'extension verticale d'une image vidéo selon la revendication 1, dans lequel ledit moyen d'obtention d'extension verticale (314) comprend :

un premier moyen formant mémoire de ligne (31), relié audit moyen de reproduction de signaux vidéo (312), afin de mémoriser ladite ligne de balayage horizontal grâce audit signal d'horloge d'échantillonnage ;
un second moyen formant mémoire de ligne (32), afin de mémoriser ladite ligne de balayage horizontal, produite à partir dudit premier moyen formant mémoire de ligne (31) grâce audit signal d'horloge d'échantillonnage ; et
des moyens d'élaboration d'opérations arithmétiques, consistant en des multiplicateurs à coefficients (33 à 35) et en un additionneur (36), en vue de procéder à l'extension verticale des données de sortie, provenant dudit moyen de reproduction de signaux vidéo et desdits premier et second moyens formant mémoires de lignes, selon un rapport de 3/4 en utilisant les équations suivantes :

$$Lo1 = Co \cdot Lin1 + C1 \cdot Lin2 + C2 \cdot Lin3$$

$$Lo2 = C3 \cdot Lin1 + C4 \cdot Lin2 + C5 \cdot Lin3$$

$$Lo3 = C6 \cdot Lin1 + C7 \cdot Lin2 + C8 \cdot Lin3$$

$$Lo4 = C9 \cdot Lin1 + C10 \cdot Lin2 + C11 \cdot Lin3$$

dans lesquelles Lo1, Lo2, Lo3 et Lo4 sont des données correspondant audit signal d'exécution d'extension verticale, Lin1 représente des données correspondant à ladite ligne de balayage horizontal, produite à partir dudit moyen de reproduction de signaux vidéo (312), Lin2 désigne des données correspondant à ladite ligne de balayage horizontal, produite à partir dudit premier moyen formant mémoire de ligne (31), Lin3 indique des données correspondant à ladite ligne de balayage horizontal, produite à partir dudit second moyen formant mémoire de ligne (32), et C0, C1, C2, C3, C4, C5, C6, C7, C8, C9, C10 et C11 sont des coefficients d'extension verticale.

**3.** Enregistreur vidéo comportant le dispositif de traitement d'extension verticale selon la revendication 1 ou 2.

**4.** Procédé d'élimination des barres foncées supérieure et inférieure, produites pendant un fonctionnement d'avance rapide dans un magnétoscope à cassettes d'un système PAL Plus, le procédé comprenant :

pendant la reproduction, l'application directe d'un signal vidéo de sortie, provenant d'un circuit de reproduction de signaux vidéo (312) du magnétoscope à cassettes, à un processeur de signaux vidéo ; et

pendant un fonctionnement d'avance rapide, l'application du signal vidéo de sortie, provenant du circuit de reproduction (312), au processeur de signaux vidéo par l'intermédiaire d'un moyen d'obtention d'extension verticale (314), ledit moyen d'obtention d'extension verticale (314) effectuant une opération d'extension en étendant verticalement des lignes de balayage horizontal dudit signal vidéo, grâce à un signal d'horloge d'échantillonnage afin de modifier le rapport de l'image d'un facteur de 3/4 pour ainsi transformer un signal PAL Plus, ayant un rapport de l'image de 16/9, en un signal ayant un rapport de l'image de 4/3.

**5.** Procédé selon la revendication 4, dans lequel ledit procédé comprend, pendant un fonctionnement d'avance rapide, les étapes de :

application du signal vidéo à une borne d'entrée d'un premier moyen formant mémoire de ligne (31) et à une première borne d'entrée d'un premier multiplicateur à coefficients (33) ;

application d'un signal de sortie du premier moyen formant mémoire de ligne (31) à une entrée d'un second moyen formant mémoire de ligne (32) et à une première borne d'entrée d'un deuxième multiplicateur à coefficients ;

application d'un signal de sortie du second moyen formant mémoire de ligne (32) à une première borne d'entrée d'un troisième multiplicateur à coefficients (35) ;

application de coefficients d'extension verticale aux secondes bornes d'entrée desdits premier, deuxième et troisième multiplicateurs à coefficients (33 à 35) ; et

sommation des signaux de sortie provenant desdits multiplicateurs à coefficients (33 à 35) et application du signal somme résultant audit processeur de signaux vidéo.

TOP DARK BAR —

BOTTOM DARK BAR —

Fig. 1

Fig. 2

Fig. 3

EP 0 778 701 B1